# EUROPEAN PATENT SPECIFICATION

(11) **EP 4 197 281 B1**
(45) Date of publication and mention of the grant of the patent: **19.06.2024**
(21) Application number: 21945423.8
(22) Date of filing: 15.06.2021
(51) Int. Cl.: H04W 36/28, H04W 84/12

(54) **DEVICES AND METHODS FOR MULTI-LINK HANDOVER IN A WIRELESS NETWORK**
VORRICHTUNGEN UND VERFAHREN FÜR MULTILINK-WEITERREICHUNG IN EINEM DRAHTLOSEN NETZWERK
DISPOSITIFS ET PROCÉDÉS DE TRANSFERT INTERCELLULAIRE À LIAISONS MULTIPLES DANS UN RÉSEAU SANS FIL

(43) Date of publication of application: 21.06.2023
(73) Proprietor: Huawei Technologies Co., Ltd., Shenzhen, Guangdong 518129 (CN)
(72) Inventor: HENCINSKI, Oren, 80992 Munich (DE); KLAUSNER, Ohad, 80992 Munich (DE); KATZMAN, Yotam, 80992 Munich (DE); PAN, Chun, Shenzhen, Guangdong 518129 (CN); EZRI, Doron, 80992 Munich (DE)
(74) Representative: Gill Jennings & Every LLP
(86) International application number: PCT/CN2021/100159
(87) International publication number: WO 2022/261831

(56) References cited:
- WO-A1-2020/040589
- WO-A1-2021/003700
- WO-A1-2021/112557
- CN-A- 111 741 500
- US-A1- 2019 053 135
- GUOGANG HUANG (HUAWEI): "Tentative Re(Association) for Non-AP MLD", IEEE DRAFT; 11-20-0834-09-00BE-TENTATIVE-RE-ASSOCIATIO N-FOR-NON-AP-MLD, IEEE-SA MENTOR, PISCATAWAY, NJ USA , vol. 802.11 EHT; 802.11be, no. 9 29 August 2020 (2020-08-29), pages 1-23, XP068172365, Retrieved from the Internet: URL:https://mentor.ieee.org/802.11/dcn/20/ 11-20-0834-09-00be-tentative-re-associatio n-for-non-ap-mld.pptx [retrieved on 2020-08-29]
- TAEWON SONG (LG ELECTRONICS): "Multi-link Management", IEEE DRAFT; 11-19-1943-05-00BE-MULTI-LINK-MANAGEMENT, IEEE-SA MENTOR, PISCATAWAY, NJ USA , vol. 802.11 EHT; 802.11be, no. 5 10 June 2020 (2020-06-10), pages 1-15, XP068169501, Retrieved from the Internet: URL:https://mentor.ieee.org/802.11/dcn/19/ 11-19-1943-05-00be-multi-link-management.p ptx [retrieved on 2020-06-10]

## Description

### TECHNICAL FIELD

The present invention relates to wireless communications. More specifically, the present invention relates to devices and methods for multi-link handover in an IEEE-802.11-based wireless communication network.

### BACKGROUND

IEEE-802.11-based WLANs have become popular at an unprecedented rate. WLANs support a variety of data transfer modes including file transfer, emails, web browsing and real-time applications such as audio and video applications. For efficiently supporting low latency and/or high throughputs, a new feature referred to as distributed "Multi-Link" has been introduced for IEEE-802.11-based WLANs. Distributed "Multi-Link" is based on the idea to setup and use more than one link between a wireless access point (AP) and one or more non-AP stations for frame exchange. The different links may use different frequency bands. In distributed "Multi-Link" system a wireless non-AP station may have links to multiple APs running the same traffic stream via multiple links.

GUOGANG HUANG (HUAWEI): "Tentative Re(Association) for Non-AP MLD",IEEE DRAFT; 11-20-0834-09-00, 29 August 2020 and TAEWON SONG (LG ELECTRONICS): "Multi-link Management",IEEE DRAFT; 11-19-1943-05-00, 10 June 2020 and CN111741500 disclose background information that are useful to understand the context of the invention, as defined in the appended claims.

### SUMMARY

It is an objective of the present disclosure to provide devices and methods for a low latency and highly reliable distributed multi-link handover in an IEEE-802.11-based wireless communication network.

The foregoing and other objectives are achieved by the subject matter of the independent claims. Further implementation forms are apparent from the dependent claims, the description and the figures.

According to a first aspect, a network entity for managing a handover of a link of a plurality of links of a multi-link wireless non-AP station in a wireless network is provided, in particular a IEEE-802.11-based wireless network. The wireless network comprises a plurality of multi-link wireless access points, APs, including a source multi-link wireless AP and a target multi-link wireless AP, wherein each multi-link wireless AP is configured to exchange a plurality of data packets with the multi-link wireless non-AP station via one or more of the plurality of links. In an implementation form, the network entity may be one of the plurality wireless APs of the wireless network. The different links may use different frequency bands.

The network entity comprises a communication interface configured to receive, for instance a station status report from the multi-link wireless non-AP station. The station status report, which may be issued at regular time intervals, comprises first information, e.g. a first identifier indicative of a first sequence number of the chronologically last, i.e. the latest data packet received by the multi-link wireless non-AP station via any one of its links. The communication interface of the network entity is further configured to receive an AP status report from at least one further multi-link wireless AP in communication with the multi-link wireless non-AP station via a first link of the plurality of links. The respective AP status report comprises second information, e.g. a second identifier indicative of a second sequence number of the chronologically first, i.e. the earliest data packet transmitted by the further multi-link wireless AP to the multi-link wireless non-AP station via the first link.

The network entity further comprises a processing circuitry configured to confirm a handover decision, i.e. determine whether the handover is to proceed based on the first information and the second information by triggering, in response to the handover decision, the communication interface to send a handover trigger signal to the multi-link wireless non-AP station for triggering the handover of a second link of the plurality of links of the multi-link wireless non-AP station from the source multi-link wireless AP to the target multi-link wireless AP. Thus, a network entity for a low latency and highly reliable distributed multi-link handover in a wireless network, in particular a IEEE-802.11-based wireless communication network is provided.

In a further possible implementation form of the first aspect, the processing circuitry is configured to confirm the handover decision based on the first information, the second information and a handover state of the first link, wherein the handover state of the first link defines whether the first link is still or already associated with the further multi-link wireless AP and/or is still in the process of a handover. Taking into account the handover state of the first links enables a zero copy seamless handover of the second link.

In a further possible implementation form of the first aspect, the processing circuitry is configured to block the communication interface from sending the handover trigger signal to the multi-link wireless non-AP station, as long as the first sequence number is smaller than the second sequence number or if the first link is in the process of a further handover. This allows the network entity to efficiently implement the zero copy seamless handover of the second link.

In a further possible implementation form of the first aspect, the further multi-link wireless AP is the target multi-link wireless AP.

In a further possible implementation form of the first aspect, the processing circuitry is configured to determine, based on the station status report and the plurality of AP status reports, a score for each of the plurality of multi-link wireless APs and to determine the target multi-link wireless AP based on the plurality of scores, e.g. the highest score. This allows the network entity to determine the most suited target multi-link wireless AP for the handover of the second link.

In a further possible implementation form of the first aspect, the processing circuitry is configured to trigger based on the handover decision the communication interface to send the handover trigger signal to the multi-link wireless non-AP station, if the score for the target multi-link wireless AP is larger than the score for the source multi-link wireless AP.

In a further possible implementation form of the first aspect, the processing circuitry is configured to determine the respective score for each multi-link wireless AP based on information about a data packet redundancy of the first link, information about the available bandwidth and/or information about a channel condition (RSSI) of each of the plurality of multi-link wireless APs. This allows the network entity to determine the most suited target multi-link wireless AP for the handover of the second link.

In a further possible implementation form of the first aspect, the processing circuitry is configured to determine the respective score for each multi-link wireless AP such that per link there is a preference to remain associated with the same multi-link wireless AP. This allows the network entity to efficiently save resources of the wireless network.

In a further possible implementation form of the first aspect, the processing circuitry is configured to determine the respective score for each multi-link wireless AP such that for the multi-link wireless non-AP station there is a preference to have each link associated with a different multi-link wireless AP. This provides a more robust wireless network.

In a further possible implementation form of the first aspect, the station status report further comprises channel state information for each of the plurality of links of the multi-link wireless non-AP station.

In a further possible implementation form of the first aspect, the communication interface is configured to send the handover trigger signal via at least the first link and the second link to the multi-link wireless non-AP station. Sending the handover trigger signal via more than one link increases the reliability of the handover procedure.

In a further possible implementation form of the first aspect, the network entity is one of the plurality of multi-link wireless APs. This allows implementing embodiments disclosed herein in already existing hardware.

According to a second aspect a method for managing a handover of a link of a plurality of links of a multi-link wireless non-AP station in a wireless network is provided. The wireless network comprises a plurality of multi-link wireless access points, APs, including a source multi-link wireless AP and a target multi-link wireless AP, wherein each multi-link wireless AP is configured to exchange a plurality of data packets with the multi-link wireless non-AP station via one or more of the plurality of links. The method comprises the steps of:
receiving at regular time intervals a station status report from the multi-link wireless non-AP station, wherein the station status report comprises first information, e.g. a first identifier indicative of a first sequence number of the last, i.e. the latest data packet received by the multi-link wireless non-AP station via any one of its links;
receiving a respective AP status report from a further multi-link wireless AP in communication with the multi-link wireless non-AP station via a first link of the plurality of links, wherein the respective AP status report comprises second information, e.g. a second identifier indicative of a second sequence number of the first, i.e. the earliest data packet transmitted by the further multi-link wireless AP to the multi-link wireless non-AP station via the first link; and
confirming a handover decision, i.e. determining whether the handover is to proceed based on the first information and the second information by triggering, in response to the handover decision, the sending of a handover control signal to the multi-link wireless non-AP station for triggering the handover of a second link of the plurality of links of the multi-link wireless non-AP station from the source multi-link wireless AP to the target multi-link wireless AP.

Thus, advantageously, a method for a low latency and reliable multi-link handover in an wireless network, in particular a IEEE-802.11-based wireless communication network is provided.

In a further possible implementation form of the second aspect, the handover decision comprises confirming the handover decision based on the first information, the second information and a handover state of the first link, wherein the handover state of the first link defines whether the first link is still or already associated with the further multi-link wireless AP and/or is still in the process of a further handover.

The method according to the second aspect of the present disclosure can be performed by the network entity according to the first aspect of the present disclosure. Thus, further features of the method according to the second aspect of the present disclosure result directly from the functionality of the network entity according to the first aspect of the present disclosure as well as its different implementation forms described above and below.

According to a third aspect a computer program product is provided, comprising program code which causes a computer or a processor to perform the method according to the second aspect, when the program code is executed by the computer or the processor.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
Fig. 1 shows a wireless communication network including a network entity according to an embodiment for managing a handover of a multi-link wireless non-AP station from a source to a target multi-link wireless AP;
Fig. 2 shows different stages of a handover of a link of multi-link wireless non-AP station from a source to a target multi-link wireless AP according to an embodiment;
Fig. 3 illustrates an exemplary station status report used by a network entity according to an embodiment for confirming a link handover;
Fig. 4 illustrates some further aspects of a link handover in the wireless communication network of figure 1;
Fig. 5 is a flow diagram illustrating a state machine implemented by a network entity according to an embodiment for managing a link handover;
Fig. 6 illustrates some further aspects of a link handover in the wireless communication network of figure 1; and
Fig. 7 shows a flow diagram illustrating steps of a method of managing a handover of a link of a multi-link wireless non-AP station in a wireless communication network.

In the following, identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

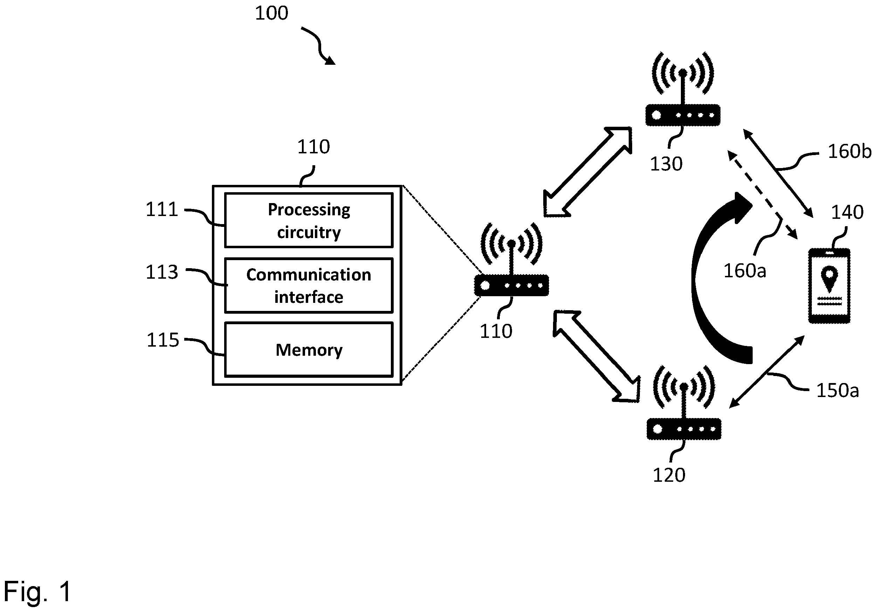

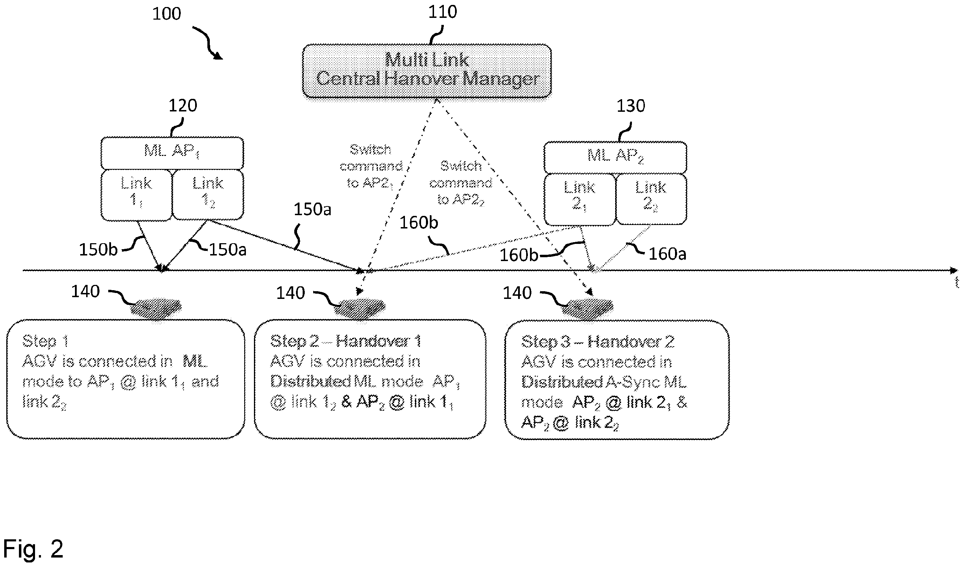

Figures 1 and 2 show a wireless communication network 100 including a plurality of multi-link wireless APs, including a source multi-link wireless AP 120 and a target multi-link wireless AP 130, one or more multi-link wireless non-AP stations 140, such as a WiFi-enabled mobile phone 140, as well as a network entity 110 according to an embodiment. In an embodiment, the wireless communication network 100 may be an IEEE-802.11-based wireless network 100. Each multi-link wireless AP is configured to exchange a plurality of data packets with the multi-link wireless non-AP station 140 via one or more of the plurality of links. The different links may use, for instance, different frequency bands.

As will be described in the following in more detail, the network entity 110 is configured to manage a handover of a link 150a of a plurality of links of the multi-link wireless non-AP station 140 in the wireless network 100. In an embodiment, the network entity 110 may be one of the plurality wireless APs of the wireless network 100.

As illustrated in figure 1, the network entity 110 comprises a processing circuitry 111 for processing data and a communication interface 113 for exchanging data with the plurality of multi-link wireless APs, including the source multi-link wireless AP 120 and the target multi-link wireless AP 130, as well as the multi-link wireless non-AP stations 140. As already described above, the network entity 110 may be implemented as one of the plurality of multi-link wireless APs. The communication interface 113 of the network entity 110 may comprise, for instance, one or more antennas for wireless communication and/or a network interface for a wired communication with the plurality of multi-link wireless APs. The processing circuitry 111 may be implemented in hardware and/or software. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. The network entity 110 may further comprise a non-volatile memory 115, e.g. a Flash memory 115, configured to store data and executable program code which, when executed by the processing circuitry 111, causes the network entity 110 to perform the functions and operations described herein.

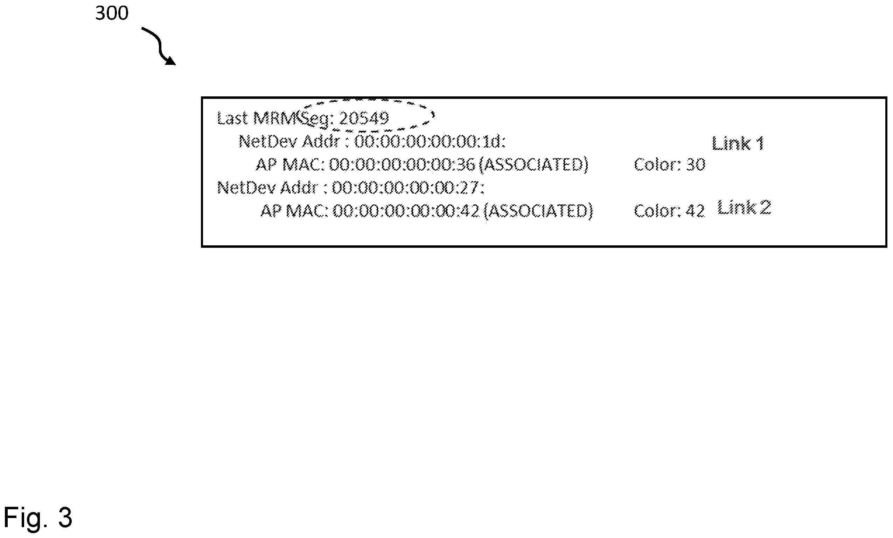

As will be described in more detail below under further reference to figure 3, the communication interface 113 of the network entity 110 is configured to receive a station status report 300 from the multi-link wireless non-AP station 140. An exemplary station status report 300 is shown in figure 3. The station status report 300 comprises a first sequence number of the chronologically last, i.e. most recent data packet received by the multi-link wireless non-AP station 140 via any of its links. As can be taken from figure 3, the station status report 300 may further comprise information, e.g. network addresses of the multi-link wireless APs associated with the multi-link wireless non-AP station 140 via its plurality of links.

The communication interface 113 of the network entity 110 is further configured to receive a respective AP status report from each of the plurality multi-link wireless APs in communication with the multi-link wireless non-AP station 140. In the exemplary embodiment shown in figures 1 and 2 the communication interface 113 of the network entity 110 will receive such an AP status report, for instance, from the target multi-link wireless AP 130, which is linked to the multi-link wireless non-AP station 140 via a first link 160b. The AP status report comprises a second sequence number of the chronologically first data packet transmitted by the target multi-link wireless AP 130 to the multi-link wireless non-AP station 140 via the first link 160b.

Based on the first sequence number extracted from the station status report and the second sequence number extracted from the AP status report the processing circuitry 111 of the network entity 110 is configured to confirm a handover decision by triggering, in response to the handover decision, the communication interface 113 to transmit a handover trigger signal to the multi-link wireless non-AP station 140. In an embodiment, the communication interface 113 of the network entity 110 is configured to send the handover trigger signal via both the first link 160b and the second link 150a to the multi-link wireless non-AP station 140 (as well as possibly any further links).

In response to receiving the handover trigger signal, the multi-link wireless non-AP station 140 initiates the handover procedure of a second link 150a of the plurality of links of the multi-link wireless non-AP station 140 from the source multi-link wireless AP 120 to the target multi-link wireless AP 130. Once the handover procedure is completed, the multi-link wireless non-AP station 140 is associated by a further link 160a with the target multi-link wireless AP 130.

Some further details of the handover procedure are illustrated in figure 2, where originally (step 1) by way of example both of the links 150a, 150b of the multi-link wireless non-AP station 140 (referred to as AGV in figure 2) are connected with the source multi-link wireless AP 120. Step 2 of figure 2 illustrates a first handover of the link 150b from the source multi-link wireless AP 120 to the target multi-link wireless AP 130 triggered by a first handover trigger signal (referred to as "Switch command" in figure 2) from the network entity 110 (referred to as "Multi-Link Central Handover Manager" 110 in figure 2). Step 3 of figure 2 illustrates a second handover of the second link 150a from the source multi-link wireless AP 120 to the target multi-link wireless AP 130 triggered by a second handover trigger signal (referred to as "Switch command" in figure 2) from the network entity 110 (referred to as "Multi-Link Central Handover Manager" 110 in figure 2), as has been described in more detail above in the context of figure 1. Once both links 150a, 150b have been handed over from the source multi-link wireless AP 120 to the target multi-link wireless AP 130 the multi-link wireless non-AP station 140 is associated link with the target multi-link wireless AP 130 via the links 160a, 160b.

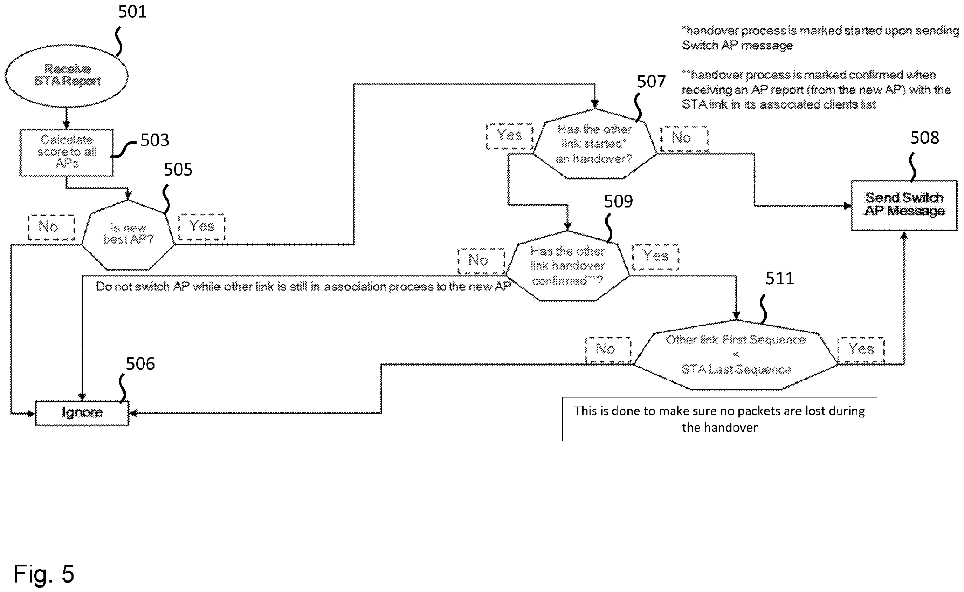

In an embodiment, the processing circuitry 111 of the network entity 110 is configured to confirm the handover decision based on the first sequence number, the second sequence number and a handover state of the first link 160b. As will be described in more detail below in the context of figure 5, the handover state of the first link 160b defines whether the first link 160b is already associated with the target multi-link wireless AP 130 or is still in the process of the first handover. In an embodiment, the processing circuitry 111 of the network entity 110 is configured to block the communication interface 113 from sending the handover trigger signal to the multi-link wireless non-AP station 140, as long as the first sequence number is smaller than the second sequence number or if the link 160b is still in the process of the first handover.

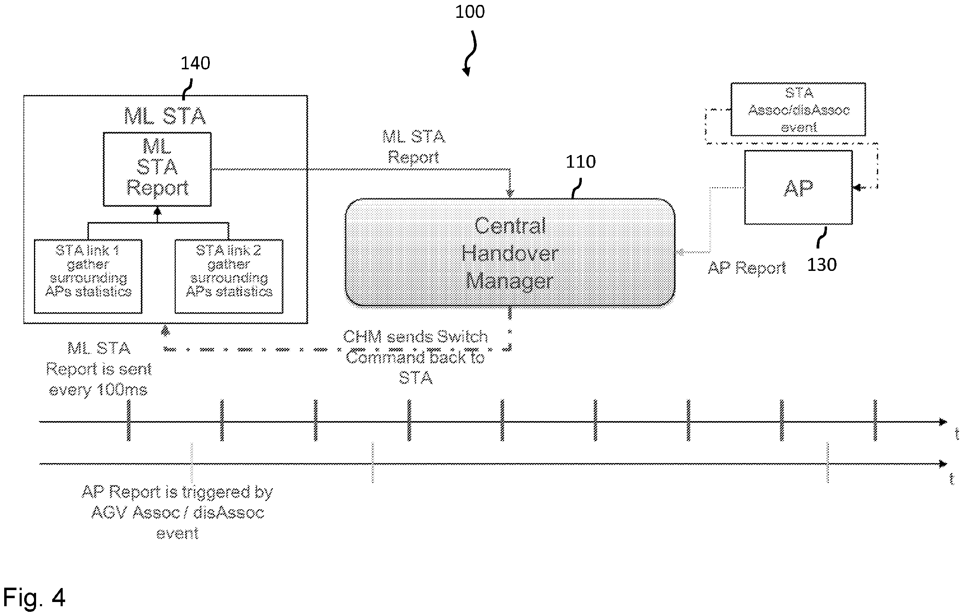

Figure 4 illustrates some further aspects of the link handover managed by the network entity 110, i.e. the central handover manager 110 in the wireless communication network 100 of figures 1 and 2. The main role of the network entity 110, i.e. the central handover manager 110 is to guarantee a zero copy seamless handover that meets ultra-low latency and ultra-high reliability criteria. As can be taken from figure 4, the network entity 110, i.e. the central handover manager 110 uses information from both the multi-link wireless non-AP station 140 as well as the plurality of multi-link wireless APs, including the source multi-link wireless AP 120 and the target multi-link wireless AP 130, via all available links and its processing circuitry 111 may take a decision whether a handover is required. In order to ensure a high reliability, in an embodiment, the processing circuitry 111 of the network entity 110 may decide on an handover by taking into account several considerations such as, but not limited to a packet redundancy transmitted by the rest of the link and/or whether the target multi-link wireless AP 130 has the required BW capacity to serve the multi-link wireless non-AP station 140. In an embodiment, deciding on a handover by the processing circuitry 111 of the network entity 110 may be triggered by receiving the station status report 300. As can be taken from figure 4, in an embodiment, the multi-link wireless non-AP station 140 may be configured to send a respective station status report 300 (referred to as "ML STA Report" in figure 4) at regular time intervals, such as every 100 ms.

Upon receiving the station status report 300, the processing circuitry 111 of the network entity 110 may be configured to determine for each of the plurality of multi-link wireless APs, including the source multi-link wireless AP 120 and the target multi-link wireless AP 130, a respective score for determining the best available multi-link wireless AP for the handover. To this end, the processing circuitry 111 of the network entity 110 may implement a scoring scheme for determining a respective score for each of the APs based on some input data. In an embodiment, the scoring scheme may be chosen to balance between two somewhat contradicting preferences, namely (a) per link there is a preference to stay associated to the same multi-link wireless AP and (b) for the multi-link wireless non-AP station 140 there is a preference to have each link associated to a different multi-link wireless AP (providing an increased reliability). Additionally or alternatively, the processing circuitry 111 of the network entity 110 may be configured to determine the respective score for each multi-link wireless AP based on information about a data packet redundancy of the first link 160b, information about the available bandwidth and/or information about a respective channel condition of each of the plurality of multi-link wireless APs. The information about the respective channel condition of each of the plurality of multi-link wireless APs may be provided to the network entity by means of the AP status reports.

As illustrated in figure 4, the network entity 110, i.e. the central handover manager 110 may gather status reports from the multi-link wireless non-AP station 140 (as well as any other multi-link wireless non-AP stations) and from all of the plurality of multi-link wireless APs, including the source multi-link wireless AP 120 and the target multi-link wireless AP 130, within the wireless network 100. The AP station reports may contain information about all of the links of the respective multi-link wireless AP, e.g. a list of associated multi-link wireless non-AP stations as well as the sequence number of the data packet received by the respective multi-link wireless AP and added to the downlink queue for the multi-link wireless non-AP station 140. As already described above in the context of figure 3, the station status report 300 may contain information about all of the links of the multi-link wireless non-AP station 140 and the sequence number of the data packet passed to the higher level. In an embodiment, this may include a multi-link reordering of sequence numbers for taking into account the data packets from all links.

Figure 5 is a flow diagram illustrating a state machine implemented by the network entity 110 according to an embodiment for managing the handover of a first link.

As already described above, the network entity 110 may receive a station status report 300 from the multi-link wireless non-AP station 140 (see 501 in figure 5). The processing circuitry 111 of the network entity 110 determines a "handover score" for all of the plurality of multi-link wireless APs (see 503 in figure 5). If the AP currently associated with the first link has the highest score (see 505 in figure 5), no handover will be initiated (see 506 of figure 5). If a different AP has the highest score, the processing circuitry 111 of the network entity 110 determines the link status of the other links, including a second link of the multi-link wireless non-AP station 140 (see 507 of figure 5). If the second link is associated with an AP, i.e. is not in a current handover process itself, the processing circuitry 111 of the network entity 110 is configured to trigger the transmission of the handover trigger signal to the multi-link wireless non-AP station 140 for triggering the handover for the first link (see 508 in figure 5). If the second link is in a handover process itself, the processing circuitry 111 of the network entity 110 may check whether the completion of the handover process of the second link already has been confirmed (see 509 of figure 5). If this is not the case, the handover procedure for the first link will be terminated (see 506 of figure 5). If, however, the completion of the handover process of the second link already has been confirmed, the processing circuitry 111 of the network entity 110 is configured to confirm the handover based on the sequence numbers provided in the station status report 200 and the AP station reports (see 511 of figure 5). As already has been described in detail above, if the first sequence number is smaller than the second sequence number, the processing circuitry 111 of the network entity 110 may terminate the handover procedure for the first link (see 506 of figure 5). Otherwise, the processing circuitry 111 of the network entity 110 is configured to trigger the transmission of the handover trigger signal to the multi-link wireless non-AP station 140 for triggering the handover for the first link (see 508 in figure 5).

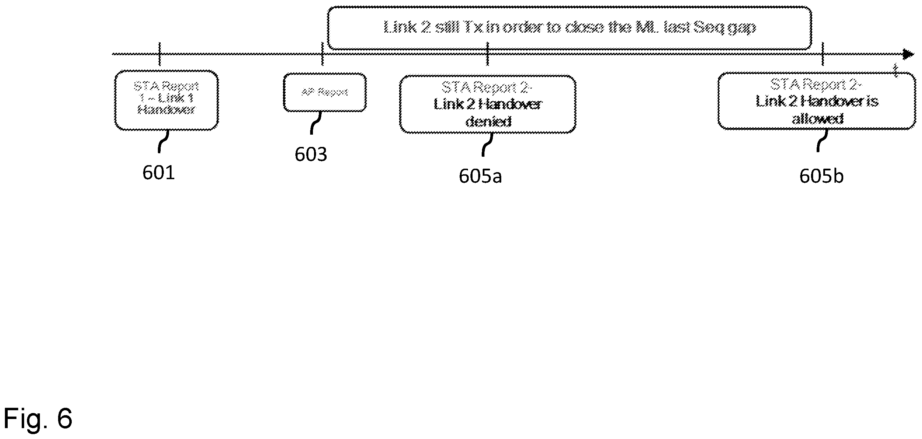

In the following an illustrative example for a handover managed by the network entity 110 will be described in more detail in the context of figure 6.
I. The network entity 110 receives the station status report 300 (see 601 in figure 6):
   1. The network entity updates the last received sequence number (after the reordering buffer), which has the exemplary value "700"
   2. Link 1
      (a) Is new best AP? → True
      (b) Has handover started? → False
      (c) Network entity 110 issues handover trigger signal and sets the handover started state for Link 1
   3. Link 2
      (a) Is new Best AP? → True
      (b) Has handover started? → True
      (c) Has other link handover been confirmed? → False
      (d) Handover is not allowed at this stage
II. The network entity 110 receives the AP status report (see 603 in figure 6):
   1. Link 1 is associated with the New Best AP - mark handover as Confirmed
   2. Set first sequence number of the first data packet that the new AP got to Tx to the station 140, which has the exemplary value "800"
III. The network entity 110 receives a further station status report 300 at a first time instant (see 605a in figure 6):
   1. Update last received sequence number (after reordering buffer), which for the first time instant has the exemplary value "750"
   2. Link 1
      (a) Is New Best AP? → False
   3. Link 2
      (a) Is New Best AP? → True
      (b) Has handover started? → True
      (c) Has other link handover been confirmed? → True
      (d) Other link first seq. number < STA last seq. number? → False
      (e) Handover is not allowed at this point
IV. The network entity 110 receives a further station status report 300 at a second later time instant (see 605b in figure 6):
   1. Update last received sequence number (after reordering buffer), which for the second later time instant has the exemplary value "804"
   2. Link 1
      (a) Is New Best AP? → False
   3. Link 2
      (a) Is New Best AP? → True
      (b) Has handover started? → True
      (c) Has other link handover been confirmed? → True
      (d) Other link first seq. number < STA last seq. number? → True
      (e) Network entity 110 issues handover trigger signal and sets the handover started state for Link 2

In an embodiment, the communication interface 113 of the network entity 110 may send the handover trigger signal as an action frame using a reserved value, such as the reserved value 3, as defined for 802.11ax_D8.0 (in Table 9-526a - HE Action filed values of the specification chapter 9.6.31 HE Action frame details).

In an embodiment, the body of the handover trigger signal may include information about the new AP channel (for instance Octet 1) and the MAC address of the new AP (for instance octets 2-7).

In an embodiment, the station status report 300 may be based on a 802.11k Beacon Report measurement frame, as described for 802.11-2016 in sections 9.6.2.3 "Measurement Report frame format", 9.4.2.22.2 "Basic report", 9.4.2.22.7 "Beacon report" of the specification.

In an embodiment, the specific information for the network entity 110 contained in the station status report 300 may be provided using the reserved sub-elements. In an embodiment, the following elements may be added:
- isAssociated - indicating that the reporting station 140 is associated with this AP
- Last sequence number - if the reporting station 140 is associated with this AP, it adds the last sequence number, if not associated (-1) may be set

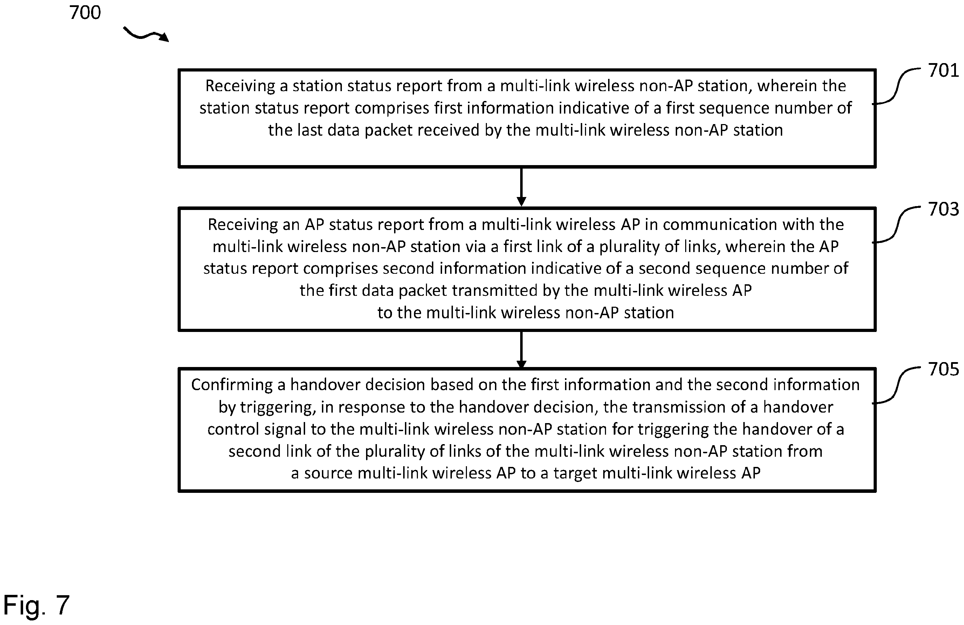

Figure 7 shows a flow diagram illustrating steps of a method 700 for managing a handover of a link of a plurality of links of the multi-link wireless non-AP station 140 in the wireless network 100. The method 700 comprises a first step 701 of receiving a station status report 300 from the multi-link wireless non-AP station 140. As already described above, the station status report 300 comprises first information indicative of the sequence number of the chronologically last data packet received by the multi-link wireless non-AP station 140.

The method 700 comprises a further step 703 of receiving an AP status report from a further multi-link wireless AP 130 in communication with the multi-link wireless non-AP station 140 via a first link 160b of the plurality of links. As already described above, the AP status report comprises second information indicative of the sequence number of the chronologically first, i.e. earliest data packet transmitted by the further multi-link wireless AP 130 to the multi-link wireless non-AP station 140. As already described above, in an embodiment, the further multi-link wireless AP 130 may be the target multi-link wireless AP 130 selected by the network entity 110 in deciding about the handover or a different multi-link wireless AP.

As can be taken from figure 7, the method 700 comprises the further step 705 of confirming the handover decision based on the first information and the second information by triggering, in response to the handover decision, the transmission of a handover control signal to the multi-link wireless non-AP station 140 for triggering the handover of the second link 150a of the plurality of links of the multi-link wireless non-AP station 140 from the source multi-link wireless AP 120 to the target multi-link wireless AP 130.

In an embodiment, the step 705 of confirming the handover decision comprises confirming the handover decision based on the first information, the second information and the handover state of the first link 160b, wherein, as already described above, the handover state of the first link 160b defines whether the first link 160b is already or still associated with the further multi-link wireless AP 130 or is in the process of a handover.

As the method 700 can be implemented by the network entity 110, further features of the method 700 result directly from the functionality of the network entity 110 and its different embodiments described above and below.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A network entity (110) for managing a handover of a link of a plurality of links of a multi-link wireless non-AP station (140) in a wireless network (100) comprising a plurality of multi-link wireless access points, APs, including a source multi-link wireless AP (120) and a target multi-link wireless AP (130), wherein each multi-link wireless AP is configured to exchange a plurality of data packets with the multi-link wireless non-AP station (140) via one or more of the plurality of links, wherein the network entity (110) comprises:
a communication interface (113) configured to receive a station status report (300) from the multi-link wireless non-AP station (140), wherein the station status report (300) comprises first information indicative of a first sequence number of the last data packet received by the multi-link wireless non-AP station (140);
wherein the communication interface (113) is further configured to receive an AP status report from a further multi-link wireless AP (130) in communication with the multi-link wireless non-AP station (140) via a first link (160b) of the plurality of links, wherein the AP status report comprises second information indicative of a second sequence number of the first data packet transmitted by the further multi-link wireless AP (130) to the multi-link wireless non-AP station (140);
a processing circuitry (111) configured to confirm a handover decision based on the first information and the second information by triggering, in response to the handover decision, the communication interface (113) to send a handover trigger signal to the multi-link wireless non-AP station (140) for triggering the handover of a second link (150a) of the plurality of links of the multi-link wireless non-AP station (140) from the source multi-link wireless AP (120) to the target multi-link wireless AP (130).

2. The network entity (110) of claim 1, wherein the processing circuitry (111) is configured to confirm the handover decision based on the first information, the second information and a handover state of the first link (160b), wherein the handover state of the first link (160b) defines whether the first link (160b) is associated with the further multi-link wireless AP (130) or is in the process of a further handover.

3. The network entity (110) of claim 2, wherein the processing circuitry (111) is configured to block the communication interface (113) from sending the handover trigger signal to the multi-link wireless non-AP station (140), as long as the first sequence number is smaller than the second sequence number or if the first link (160b) is in the process of a handover.

4. The network entity (110) of any one of the preceding claims, wherein the further multi-link wireless AP (130) is the target multi-link wireless AP (130).

5. The network entity (110) of any one of the preceding claims, wherein the processing circuitry (111) is configured to determine, based on the station status report (300) and the plurality of AP status reports, a score for each of the plurality of multi-link wireless APs and to determine the target multi-link wireless AP (130) based on the plurality of scores.

6. The network entity (110) of claim 5, wherein the processing circuitry (111) is configured to trigger based on the handover decision the communication interface (113) to send the handover trigger signal to the multi-link wireless non-AP station (140), if the score for the target multi-link wireless AP (130) is larger than the score for the source multi-link wireless AP (120).

7. The network entity (110) of claim 5 or 6, wherein the processing circuitry (111) is configured to determine the respective score for each multi-link wireless AP based on information about a data packet redundancy of the first link (160b), information about the available bandwidth and/or information about a channel condition of each of the plurality of multi-link wireless APs.

8. The network entity (110) of any one of claims 5 to 7, wherein the processing circuitry (111) is configured to determine the respective score for each multi-link wireless AP such that per link there is a preference to remain associated with the same multi-link wireless AP.

9. The network entity (110) of any one of claims 5 to 8, wherein the processing circuitry (111) is configured to determine the respective score for each multi-link wireless AP such that for the multi-link wireless non-AP station (140) there is a preference to have each link associated with a different multi-link wireless AP.

10. The network entity (110) of any one of the preceding claims, wherein the station status report (300) further comprises channel state information for each of the plurality of links of the multi-link wireless non-AP station (140).

11. The network entity (110) of any one of the preceding claims, wherein the communication interface (113) is configured to send the handover trigger signal via at least the first link (160b) and the second link (150a) to the multi-link wireless non-AP station (140).

12. The network entity (110) of any one of the preceding claims, wherein the network entity (110) is one of the plurality of multi-link wireless APs.

13. A method (700) for managing a handover of a link of a plurality of links of a multi-link wireless non-AP station (140) in a wireless network (100) comprising a plurality of multi-link wireless access points, APs, including a source multi-link wireless AP (120) and a target multi-link wireless AP (130), wherein each multi-link wireless AP is configured to exchange a plurality of data packets with the multi-link wireless non-AP station (140) via one or more of the plurality of links, wherein the method (700) comprises:
receiving (701) a station status report (300) from the multi-link wireless non-AP station (140), wherein the station status report (300) comprises first information indicative of a first sequence number of the last data packet received by the multi-link wireless non-AP station (140);
receiving (703) an AP status report from a further multi-link wireless AP (130) in communication with the multi-link wireless non-AP station (140) via a first link (160b) of the plurality of links, wherein the AP status report comprises second information indicative of a second sequence number of the first data packet transmitted by the further multi-link wireless AP (130) to the multi-link wireless non-AP station (140); and
confirming (705) a handover decision based on the first information and the second information by triggering, in response to the handover decision, sending a handover control signal to the multi-link wireless non-AP station (140) for triggering the handover of a second link (150a) of the plurality of links of the multi-link wireless non-AP station (140) from the source multi-link wireless AP (120) to the target multi-link wireless AP (130).

14. The method (700) of claim 13, wherein confirming (705) the handover decision comprises confirming the handover decision based on the first information, the second information and a handover state of the first link (160b), wherein the handover state of the first link (160b) defines whether the first link (160b) is associated with the further multi-link wireless AP (130) or is in the process of a handover.

15. A computer program product comprising a computer-readable storage medium for storing program code which causes a computer or a processor to perform the method (700) of claim 13 or 14 when the program code is executed by the computer or the processor.

## Patentansprüche

1. Netzwerkeinrichtung (110) zum Verwalten einer Weiterreichung einer Verbindung einer Vielzahl von Verbindungen einer drahtlosen Multilink-Nicht-AP-Station (140) in einem drahtlosen Netzwerk (100), das eine Vielzahl von drahtlosen Multilink-Zugangspunkten, APs, umfasst, einschließlich eines drahtlosen Quellen-Multilink-AP (120) und eines drahtlosen Ziel-Multilink-AP (130), wobei jeder drahtlose Multilink-AP dazu ausgelegt ist, eine Vielzahl von Datenpaketen mit der drahtlosen Multilink-Nicht-AP-Station (140) über eine oder mehrere der Vielzahl von Verbindungen auszutauschen, wobei die Netzwerkeinrichtung (110) Folgendes enthält:
eine Kommunikationsschnittstelle (113), die dazu ausgelegt ist, einen Stationsstatusbericht (300) aus der drahtlosen Multilink-Nicht-AP-Station (140) zu empfangen, wobei der Stationsstatusbericht (300) erste Informationen umfasst, die eine erste Sequenznummer des letzten aus der drahtlosen Multilink-Nicht-AP-Station (140) empfangenen Datenpakets anzeigen;
wobei die Kommunikationsschnittstelle (113) ferner dazu ausgelegt ist, einen AP-Statusbericht aus einem weiteren drahtlosen Multilink-AP (130) zu empfangen, der über eine erste Verbindung (160b) der Vielzahl von Verbindungen mit der drahtlosen Multilink-Nicht-AP-Station (140) kommuniziert, wobei der AP-Statusbericht zweite Informationen umfasst, die eine zweite Sequenznummer des ersten Datenpakets angeben, das durch den weiteren drahtlosen Multilink-AP (130) an die drahtlose Multilink-Nicht-AP-Station (140) übertragen wird,
eine Verarbeitungsschaltungsanordnung (111), die dazu ausgelegt ist, eine Weiterreichungsentscheidung basierend auf den ersten Informationen und den zweiten Informationen zu bestätigen, indem als Reaktion auf die Weiterreichungsentscheidung die Kommunikationsschnittstelle (113) ausgelöst wird, ein Weiterreichungsauslösesignal an die drahtlose Multilink-Nicht-AP-Station (140) zu senden, um die Weiterreichung einer zweiten Verbindung (150a) der Vielzahl von Verbindungen der drahtlosen Multilink-Nicht-AP-Station (140) aus dem drahtlosen Quellen-Multilink-AP (120) an den drahtlosen Ziel-Multilink-AP (130) auszulösen.

2. Netzwerkeinrichtung (110) nach Anspruch 1, wobei die Verarbeitungsschaltungsanordnung (111) dazu ausgelegt ist, die Weiterreichungsentscheidung basierend auf den ersten Informationen, den zweiten Informationen und einem Weiterreichungszustand der ersten Verbindung (160b) zu bestätigen, wobei der Weiterreichungszustand der ersten Verbindung (160b) definiert, ob die erste Verbindung (160b) dem weiteren drahtlosen Multilink-AP (130) zugeordnet ist oder sich im Vorgang einer weiteren Weiterreichung befindet.

3. Netzwerkeinrichtung (110) nach Anspruch 2, wobei die Verarbeitungsschaltungsanordnung (111) dazu ausgelegt ist, die Kommunikationsschnittstelle (113) daran zu hindern, das Weiterreichungsauslösesignal an die drahtlose Multilink-Nicht-AP-Station (140) zu senden, solange die erste Sequenznummer kleiner als die zweite Sequenznummer ist oder wenn die erste Verbindung (160b) sich im Vorgang einer Weiterreichung befindet.

4. Netzwerkeinrichtung (110) nach einem der vorhergehenden Ansprüche, wobei der weitere drahtlose Multilink-AP (130) der drahtlose Ziel-Multilink-AP (130) ist.

5. Netzwerkeinrichtung (110) nach einem der vorhergehenden Ansprüche, wobei die Verarbeitungsschaltungsanordnung (111) dazu ausgelegt ist, basierend auf dem Stationsstatusbericht (300) und der Vielzahl von AP-Statusberichten eine Punktzahl für jeden der Vielzahl von drahtlosen Multilink-APs zu bestimmen und den drahtlosen Ziel-Multilink-AP (130) basierend auf der Vielzahl von Punktzahlen zu bestimmen.

6. Netzwerkeinrichtung (110) nach Anspruch 5, wobei die Verarbeitungsschaltungsanordnung (111) dazu ausgelegt ist, basierend auf der Weiterreichungsentscheidung die Kommunikationsschnittstelle (113) auszulösen, das Weiterreichungsauslösesignal an die drahtlose Multilink-Nicht-AP-Station (140) zu senden, wenn die Punktzahl für den drahtlosen Ziel-Multilink-AP (130) größer als der Wert für den drahtlosen Quellen-Multilink-AP (120) ist.

7. Netzwerkeinrichtung (110) nach Anspruch 5 oder 6, wobei die Verarbeitungsschaltungsanordnung (111) dazu ausgelegt ist, die jeweilige Punktzahl für jeden drahtlosen Multilink-AP basierend auf Informationen über eine Datenpaketredundanz der ersten Verbindung (160b), Informationen über die verfügbare Bandbreite und/oder Informationen über einen Kanalzustand jedes der Vielzahl von drahtlosen Multilink-APs zu bestimmen.

8. Netzwerkeinrichtung (110) nach einem der Ansprüche 5 bis 7, wobei die Verarbeitungsschaltungsanordnung (111) dazu ausgelegt ist, die jeweilige Punktzahl für jeden drahtlosen Multilink-AP so zu bestimmen, dass für jede Verbindung bevorzugt wird, mit demselben drahtlosen Multilink-AP verbunden zu bleiben.

9. Netzwerkeinrichtung (110) nach einem der Ansprüche 5 bis 8, wobei die Verarbeitungsschaltungsanordnung (111) dazu ausgelegt ist, die jeweilige Punktzahl für jeden drahtlosen Multilink-AP so zu bestimmen, dass für die drahtlose Multilink-Nicht-AP-Station (140) bevorzugt wird, dass jede Verbindung einem anderen drahtlosen Multilink-AP zugeordnet wird.

10. Netzwerkeinrichtung (110) nach einem der vorhergehenden Ansprüche, wobei der Stationsstatusbericht (300) ferner Kanalzustandsinformationen für jede der Vielzahl von Verbindungen der drahtlosen Multilink-Nicht-AP-Station (140) umfasst.

11. Netzwerkeinrichtung (110) nach einem der vorhergehenden Ansprüche, wobei die Kommunikationsschnittstelle (113) dazu ausgelegt ist, das Weiterreichungsauslösesignal über mindestens die erste Verbindung (160b) und die zweite Verbindung (150a) an die drahtlose Multilink-Nicht-AP-Station (140) zu senden.

12. Netzwerkeinrichtung (110) nach einem der vorhergehenden Ansprüche, wobei die Netzwerkeinrichtung (110) eine der Vielzahl von drahtlosen Multilink-APs ist.

13. Verfahren (700) zum Verwalten einer Weiterreichung einer Verbindung einer Vielzahl von Verbindungen einer drahtlosen Multilink-Nicht-AP-Station (140) in einem drahtlosen Netzwerk (100), das eine Vielzahl von drahtlosen Multilink-Zugangspunkten, APs, umfasst, einschließlich eines drahtlosen Quellen-Multilink-AP (120) und eines drahtlosen Ziel-Multilink-AP (130), wobei jeder drahtlose Multilink-AP dazu ausgelegt ist, eine Vielzahl von Datenpaketen mit der drahtlosen Multilink-Nicht-AP-Station (140) über eine oder mehrere der Vielzahl von Verbindungen auszutauschen, wobei das Verfahren (700) Folgendes umfasst:
Empfangen (701) eines Stationsstatusberichts (300) aus der drahtlosen Multilink-Nicht-AP-Station (140), wobei der Stationsstatusbericht (300) erste Informationen umfasst, die eine erste Sequenznummer des letzten aus der drahtlosen Multilink-Nicht-AP-Station (140) empfangenen Datenpakets anzeigen;
Empfangen (703) eines AP-Statusberichts aus einem weiteren drahtlosen Multilink-AP (130), der über eine erste Verbindung (160b) der Vielzahl von Verbindungen mit der drahtlosen Multilink-Nicht-AP-Station (140) kommuniziert, wobei der AP-Statusbericht zweite Informationen umfasst, die eine zweite Sequenznummer des ersten Datenpakets angeben, das durch den weiteren drahtlosen Multilink-AP (130) an die drahtlose Multilink-Nicht-AP-Station (140) übertragen wird, und
Bestätigen (705) einer Weiterreichungsentscheidung basierend auf den ersten Informationen und den zweiten Informationen durch Auslösen, als Reaktion auf die Weiterreichungsentscheidung, des Sendens eines Weiterreichungssteuersignals an die drahtlose Multilink-Nicht-AP-Station (140) zum Auslösen der Weiterreichung einer zweiten Verbindung (150a) der Vielzahl von Verbindungen der drahtlosen Multilink-Nicht-AP-Station (140) von dem drahtlosen Quellen-Multilink-AP (120) an den drahtlosen Ziel-Multilink-AP (130).

14. Verfahren (700) nach Anspruch 13, wobei das Bestätigen (705) der Weiterreichungsentscheidung das Bestätigen der Weiterreichungsentscheidung basierend auf den ersten Informationen, den zweiten Informationen und einem Weiterreichungszustand der ersten Verbindung (160b) umfasst, wobei der Weiterreichungszustand der ersten Verbindung (160b) definiert, ob die erste Verbindung (160b) dem weiteren drahtlosen Multilink-AP (130) zugeordnet ist oder sich im Vorgang einer Weiterreichung befindet.

15. Computerprogrammprodukt, umfassend ein computerlesbares Speichermedium zum Speichern von Programmcode, der einen Computer oder einen Prozessor veranlasst, das Verfahren (700) nach Anspruch 13 oder 14 durchzuführen, wenn der Programmcode durch den Computer oder den Prozessor ausgeführt wird.

## Revendications

1. Entité de réseau (110) pour gérer un transfert d'une liaison parmi une pluralité de liaisons d'une station non-AP sans fil multiliaison (140) dans un réseau sans fil (100) comprenant une pluralité de points d'accès, AP, sans fil multiliaisons comportant un AP sans fil multiliaison source (120) et un AP sans fil multiliaison cible (130), chaque AP sans fil multiliaison étant configuré pour échanger une pluralité de paquets de données avec la station non-AP sans fil multiliaison (140) via une ou plusieurs de la pluralité de liaisons, l'entité de réseau (110) comprenant :
une interface de communication (113) configurée pour recevoir un rapport d'état de station (300) en provenance de la station non-AP sans fil multiliaison (140), le rapport d'état de station (300) comprenant des premières informations indiquant un premier numéro de séquence du dernier paquet de données reçu par la station non-AP sans fil multiliaison (140) ;
l'interface de communication (113) étant configurée en outre pour recevoir un rapport d'état d'AP en provenance d'un autre AP sans fil multiliaison (130) en communication avec la station non-AP sans fil multiliaison (140) via une première liaison (160b) parmi la pluralité de liaisons, le rapport d'état d'AP comprenant des deuxièmes informations indiquant un deuxième numéro de séquence du premier paquet de données transmis par l'autre AP sans fil multiliaison (130) à la station non-AP sans fil multiliaison (140) ;
une circuiterie de traitement (111) configurée pour confirmer une décision de transfert sur la base des premières informations et des deuxièmes informations en déclenchant, en réponse à la décision de transfert, l'envoi, par l'interface de communication (113), d'un signal de déclenchement de transfert à la station non-AP sans fil multiliaison (140) pour déclencher le transfert d'une deuxième liaison (150a) parmi la pluralité de liaisons de la station non-AP sans fil multiliaison (140) depuis l'AP sans fil multiliaison source (120) vers l'AP sans fil multiliaison cible (130).

2. Entité de réseau (110) selon la revendication 1, la circuiterie de traitement (111) étant configurée pour confirmer la décision de transfert sur la base des premières informations, des deuxièmes informations et d'un état de transfert de la première liaison (160b), l'état de transfert de la première liaison (160b) définissant si la première liaison (160b) est associée à l'autre AP sans fil multiliaison (130) ou est engagée dans un autre transfert.

3. Entité de réseau (110) selon la revendication 2, la circuiterie de traitement (111) étant configurée pour empêcher l'interface de communication (113) d'envoyer le signal de déclenchement de transfert à la station non-AP sans fil multiliaison (140), tant que le premier numéro de séquence est inférieur au deuxième numéro de séquence ou si la première liaison (160b) est engagée dans un transfert.

4. Entité de réseau (110) selon l'une quelconque des revendications précédentes, l'autre AP sans fil multiliaison (130) étant l'AP sans fil multiliaison cible (130).

5. Entité de réseau (110) selon l'une quelconque des revendications précédentes, la circuiterie de traitement (111) étant configurée pour déterminer, sur la base du rapport d'état de station (300) et de la pluralité de rapports d'état d'AP, un score pour chacun de la pluralité d'AP sans fil multiliaisons et pour déterminer l'AP sans fil multiliaison cible (130) sur la base de la pluralité de scores.

6. Entité de réseau (110) selon la revendication 5, la circuiterie de traitement (111) étant configurée pour déclencher, sur la base de la décision de transfert, l'envoi, par l'interface de communication (113), du signal de déclenchement de transfert à la station non-AP sans fil multiliaison (140), si le score pour l'AP sans fil multiliaison cible (130) est supérieur au score pour l'AP sans fil multiliaison source (120).

7. Entité de réseau (110) selon la revendication 5 ou 6, la circuiterie de traitement (111) étant configurée pour déterminer le score respectif pour chaque AP sans fil multiliaison sur la base d'informations concernant une redondance de paquets de données de la première liaison (160b), d'informations concernant la bande passante disponible et/ou d'informations concernant une situation de canal de chacun de la pluralité d'AP sans fil multiliaisons.

8. Entité de réseau (110) selon l'une quelconque des revendications 5 à 7, la circuiterie de traitement (111) étant configurée pour déterminer le score respectif pour chaque AP sans fil multiliaison de sorte qu'il existe, par liaison, une préférence pour qu'elle reste associée au même AP sans fil multiliaison.

9. Entité de réseau (110) selon l'une quelconque des revendications 5 à 8, la circuiterie de traitement (111) étant configurée pour déterminer le score respectif pour chaque AP sans fil multiliaison de sorte qu'il existe, pour la station non-AP sans fil multiliaison (140), une préférence pour que chaque liaison soit associée à un AP sans fil multiliaison différent.

10. Entité de réseau (110) selon l'une quelconque des revendications précédentes, le rapport d'état de station (300) comprenant en outre des informations d'état de canal pour chacune de la pluralité de liaisons de la station non-AP sans fil multiliaison (140).

11. Entité de réseau (110) selon l'une quelconque des revendications précédentes, l'interface de communication (113) étant configurée pour envoyer le signal de déclenchement de transfert, via au moins la première liaison (160b) et la deuxième liaison (150a), à la station non-AP sans fil multiliaison (140).

12. Entité de réseau (110) selon l'une quelconque des revendications précédentes, l'entité de réseau (110) étant l'un de la pluralité d'AP sans fil multiliaisons.

13. Procédé (700) de gestion d'un transfert d'une liaison parmi une pluralité de liaisons d'une station non-AP sans fil multiliaison (140) dans un réseau sans fil (100) comprenant une pluralité de points d'accès, AP, sans fil multiliaisons comportant un AP sans fil multiliaison source (120) et un AP sans fil multiliaison cible (130), chaque AP sans fil multiliaison étant configuré pour échanger une pluralité de paquets de données avec la station non-AP sans fil multiliaison (140) via une ou plusieurs de la pluralité de liaisons, le procédé (700) comprenant :
la réception (701) d'un rapport d'état de station (300) en provenance de la station non-AP sans fil multiliaison (140), le rapport d'état de station (300) comprenant des premières informations indiquant un premier numéro de séquence du dernier paquet de données reçu par la station non-AP sans fil multiliaison (140) ;
la réception (703) d'un rapport d'état d'AP en provenance d'un autre AP sans fil multiliaison (130) en communication avec la station non-AP sans fil multiliaison (140) via une première liaison (160b) parmi la pluralité de liaisons, le rapport d'état d'AP comprenant des deuxièmes informations indiquant un deuxième numéro de séquence du premier paquet de données transmis par l'autre AP sans fil multiliaison (130) à la station non-AP sans fil multiliaison (140) ; et
la confirmation (705) d'une décision de transfert sur la base des premières informations et des deuxièmes informations par déclenchement, en réponse à la décision de transfert, de l'envoi d'un signal de commande de transfert à la station non-AP sans fil multiliaison (140) pour déclencher le transfert d'une deuxième liaison (150a) parmi la pluralité de liaisons de la station non-AP sans fil multiliaison (140) depuis l'AP sans fil multiliaison source (120) vers l'AP sans fil multiliaison cible (130).

14. Procédé (700) selon la revendication 13, la confirmation (705) de la décision de transfert comprenant la confirmation de la décision de transfert sur la base des premières informations, des deuxièmes informations et d'un état de transfert de la première liaison (160b), l'état de transfert de la première liaison (160b) définissant si la première liaison (160b) est associée à l'autre AP sans fil multiliaison (130) ou est engagée dans un transfert.

15. Produit-programme d'ordinateur comprenant un support de stockage lisible par ordinateur pour stocker un code de programme qui amène un ordinateur ou un processeur à réaliser le procédé (700) selon la revendication 13 ou 14 lorsque le code de programme est exécuté par l'ordinateur ou le processeur.
